# EUROPEAN PATENT APPLICATION

(11) **EP 3 886 390 A1**
(43) Date of publication of application: **29.09.2021**
(21) Application number: 20165790.5
(22) Date of filing: 26.03.2020
(51) Int. Cl.: H04L 29/06, H04L 12/24

(54) **TOKEN MANAGEMENT**

(71) Applicant: Nokia Technologies Oy, 02610 Espoo (FI)
(72) Inventor: PRASAD, Pradyumna Ram, 560078 Bangalore (IN); BYKAMPADI, Nagendra, 560102 Bangalore (IN); MURTHY, Krishna, 560072 Bangalore (IN); MURALIDHARA, Harish, 560023 Bangalore (IN)
(74) Representative: Laine IP Oy

(57) **Abstract**

According to an example aspect of the present invention, there is provided an apparatus configured to operate as a network repository function and issue access tokens to network function consumers, thereby authorizing access to services provided by network function producers, assign a revoked status to a first access token, which has been issued by the apparatus to a first network function consumer for accessing a service of a first network function producer, and notify at least one of the first network function producer and the first network function consumer of the revoked status of the first access token. An apparatus in accordance with the present disclosure may comprise a user equipment, for example.

## Description

### FIELD

The present disclosure pertains to management of tokens, such as access tokens.

### BACKGROUND

In networks supporting wireless or wire-based communication, discovering network functions, NFs, and network function services is of interest as many network function instances are virtualized and are of a dynamic nature. Core network, CN, entities may seek to discover a set of one or more NF instances and NF service instances for a specific NF service or an NF type. Examples of such CN entities include NFs and service communication proxies, SCPs. Examples of NF instances to be discovered include application functions, gateways and subscriber data repositories, and also application related functions, for example for vertical industry support, or entertainment. Further examples include a (radio) access or resource control or management function, a session management or control function, an interworking, data management or storage function, an authentication function or a combination of one or more of these functions. NF service instances, known also as NF services, include individual services provided by an NF. One NF may be configured to provide more than one service, wherein each of the more than one service may be reachable using a different approach, such as a different port or communication protocol.

NF service discovery may be enabled via a NF discovery procedure, as specified for wireless communication networks in technical specifications established by the third generation partnership project, 3GPP, or GSMA, GSM association, for example. However, technology disclosed herein has relevance also to wire-line communication networks, such as internet protocol, IP, based networking, or a combination thereof.

### SUMMARY

According to some aspects, there is provided the subject-matter of the independent claims. Some embodiments are defined in the dependent claims. The scope of protection sought for various embodiments of the invention is set out by the independent claims. The embodiments, examples and features, if any, described in this specification that do not fall under the scope of the independent claims are to be interpreted as examples useful for understanding various embodiments of the invention.

According to a first aspect of the present disclosure, there is provided an apparatus comprising at least one processing core, at least one memory including computer program code, the at least one memory and the computer program code being configured to, with the at least one processing core, cause the apparatus at least to operate as a network repository function and issue access tokens to network function consumers, thereby authorizing access to services provided by network function producers, assign a revoked status to a first access token, which has been issued by the apparatus to a first network function consumer for accessing a service of a first network function producer, and notify at least one of the first network function producer and the first network function consumer of the revoked status of the first access token.

According to a second aspect of the present disclosure, there is provided an apparatus comprising at least one processing core, at least one memory including computer program code, the at least one memory and the computer program code being configured to, with the at least one processing core, cause the apparatus at least to operate as a network function producer by providing at least a first service to requesting network function consumers, process a service request for the first service, the service request comprising an access token, at least by determining whether the service request is a first service request comprising the access token, and send a query message concerning the access token to a network repository function to query for a status of the access token.

According to a third aspect of the present disclosure, there is provided a method comprising operating an apparatus as a network repository function and issuing access tokens to network function consumers, thereby authorizing access to services provided by network function producers, assigning a revoked status to a first access token, which has been issued by the apparatus to a first network function consumer for accessing a service of a first network function producer, and notifying at least one of the first network function producer and the first network function consumer of the revoked status of the first access token.

According to a fourth aspect of the present disclosure, there is provided a method comprising operating an apparatus as a network function producer by providing at least a first service to requesting network function consumers, processing a service request for the first service, the service request comprising a first access token, at least by determining whether the service request is a first service request comprising the first access token, and sending a query message concerning the access token to a network repository function to query for a status of the first access token.

According to a fifth aspect of the present disclosure, there is provided a non-transitory computer readable medium having stored thereon a set of computer readable instructions that, when executed by at least one processor, cause an apparatus to at least operate as a network repository function and issue access tokens to network function consumers, thereby authorizing access to services provided by network function producers, assign a revoked status to a first access token, which has been issued by the apparatus to a first network function consumer for accessing a service of a first network function producer, and notify at least one of the first network function producer and the first network function consumer of the revoked status of the first access token.

According to a sixth aspect of the present disclosure, there is provided a non-transitory computer readable medium having stored thereon a set of computer readable instructions that, when executed by at least one processor, cause an apparatus to at least operate as a network function producer by providing at least a first service to requesting network function consumers, process a service request for the first service, the service request comprising an access token, at least by determining whether the service request is a first service request comprising the access token, and send a query message concerning the access token to a network repository function to query for a status of the access token.

According to a seventh aspect of the present disclosure, there is provided an apparatus comprising means for operating an apparatus as a network repository function and issuing access tokens to network function consumers, thereby authorizing access to services provided by network function producers, assigning a revoked status to a first access token, which has been issued by the apparatus to a first network function consumer for accessing a service of a first network function producer, and notifying at least one of the first network function producer and the first network function consumer of the revoked status of the first access token

According to an eighth aspect of the present disclosure, there is provided and apparatus comprising means for operating an apparatus as a network function producer by providing at least a first service to requesting network function consumers, processing a service request for the first service, the service request comprising a first access token, at least by determining whether the service request is a first service request comprising the first access token, and sending a query message concerning the access token to a network repository function to query for a status of the first access token.

According to further aspects of the present invention, there are provided computer programs configured to cause a method in accordance with the third and fourth aspect, respectively, to be performed, when run.

### BRIEF DESCRIPTION OF THE DRAWINGS

FIGURE 1 illustrates an example system in accordance with at least some embodiments of the present invention;
FIGURE 2 illustrates an example process in accordance with at least some embodiments of the present invention;
FIGURE 3 illustrates an example process in accordance with at least some embodiments of the present invention;
FIGURE 4 illustrates an example apparatus capable of supporting at least some embodiments of the present invention, and
FIGURE 5 is a flow graph of a method in accordance with at least some embodiments of the present invention.

### EMBODIMENTS

Where access tokens are used to authorize access of network function consumers, NFc, to a service, or to services, offered by one or more network function producers, NFp, management of these access tokens is of interest. In accordance with solutions disclosed herein, a network repository function, NRF, or another network support function, may act as an authorizing entity by issuing access tokens to NFc entities. An access token already provided to one or more NFc entities may be revoked by changing its state in the NRF to a revoked state. The NRF may store one or more subscriptions to the state of the access token, such that once the state of the access token is changed to the revoked state, the NRF may, in accordance with the one or more subscriptions, notify NF entities concerning the revocation. Entities which may subscribe to the state of the access token may include NFc entities which have been given the access token and NFp entities which offer service(s) authorized with the access token. Subscriptions to the state of the access token may be configured in connection with giving the access token to an NFc, and/or in connection with verifying for the first time that the access token is valid by an NFp, as will be described herein below.

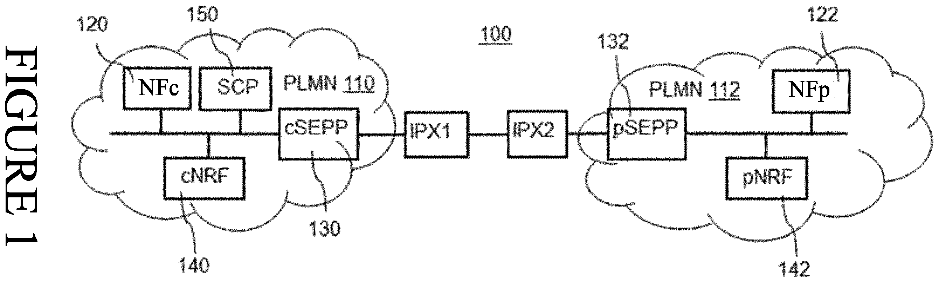

FIGURE 1 illustrates an example system 100 in accordance with at least some embodiments of the present invention. The system comprises two public land mobile networks, PLMNs, 110, 112, each equipped with a network function, NF, 120, 122. A network function may refer to an operational and/or a physical entity. A network function may be a specific network node or element, or a specific function or set of functions carried out by one or more entities, such as virtualized network elements, VNFs. One physical node may be configured to perform plural NFs. Examples of such network functions include a (radio) access or resource control or management function, session management or control function, interworking, data management or storage function, authentication function or a combination of one or more of these functions.

In case of a third generation partnership project, 3GPP, 5G system service based architecture, SBA, core network, NFs may comprise at least some of an access and mobility function, AMF, a session management function, SMF, a network slice selection function, NSSF, a network exposure function, NEF, a network repository function, NRF, a unified data management, UDM, an authentication server function, AUSF, a policy control function, PCF, and an application function, AF. A further example is a user plane function, UPF, wherein an NRF may be used for dynamic registration of UPF services to NRF. The PLMNs each may further comprise a security edge protection proxy, SEPP, 130, 132 configured to operate as a security edge node or gateway. The NFs may communicate with each other using representational state transfer application programming interfaces. These may be known as Restful APIs. Further examples of NFs include NFs related to gaming, streaming or industrial process control. The system may comprise also nodes from 3G or 4G node systems, such as home subscriber server, HSS, and a suitable interworking function for protocol translations between e.g. diameter and REST API Json.

The SEPP 130, 132 is a network node at the boundary of an operator's network that may be configured to receive a message, such as an HTTP request or HTTP response from the NF, apply protection for sending, and forward the reformatted message through a chain of intermediate nodes, such as IP eXchanges, IPX, towards a receiving SEPP. The receiving SEPP receives a message sent by the sending SEPP and forwards the message towards an NF within its operator's network, e.g. the AUSF. The SEPP may make additional security validations.

In the example of FIGURE 1, an inter-PLMN interconnect allows secure communication between a service-consuming NF and a service-producing NF, henceforth referred to as NFc 120 and NFp 122. They may also be referred to as NF service consumer and NF service producer, respectively.

A service communication proxy, SCP, 150 may be deployed for indirect communication between network functions, NFs. An SCP is an intermediate function/element to assist in routing messages, such as, for example, control plane messages between NFs.

Direct communication may be applied between NFc 120 and NFc 122 for an NF service, or NF service communication may be performed indirectly via SCP(s) 150. In direct communication, the NFc 120 performs discovery of the target NFp 122 by local configuration or via local NRF, cNRF 140. The NFc 120 may delegate the discovery of the target NFp 122 to the SCP 150 used for indirect communication. In the latter case, the SCP may use the parameters provided by NFc 120 to perform discovery and/or selection of the target NF service producer, for example with reference to one or more NRF

NF discovery and NF service discovery enable core network entities, such as NFc or SCP, to discover a set of NF instance(s) and NF service instance(s) for a specific NF service or an NF type. The network repository function, NRF, may comprise a function that is used to support the functionality of NF and NF service discovery and status notification. The NRF may maintain an NF profile of available NF instances and their supported services. The NRF may notify about newly registered, updated, or deregistered NF instances along with its NF services to a subscribed NFc or SCP. An NRF may thus advise NFc entities concerning where, that is, from which NFps, they may obtain services they need. An NRF may be co-located together with an SCP, for example, run in a same computing substrate. Alternatively NRF may be in a physically distinct node than an SCP or even hosted by a service provider.

In order for the NFc 120 or SCP 150 to obtain information about the NF and/or NF service(s) registered or configured in a PLMN/slice, the NFc 120 or SCP 150 may initiate, based on local configuration, a discovery procedure with an NRF, such as cNRF 140. The discovery procedure may be initiated by providing the type of the NF and optionally a list of the specific service(s) it is attempting to discover. The NFc 120 or SCP 150 may also provide other service parameters, such as information relating to network slicing.

It is to be noted that at least some of the entities or nodes 120, 122, 130, 132, 140, 142 and 150 may act in both service-consuming and service-providing roles and that their physical structure may be similar or identical, while their role in the present examples in delivery of a particular message is identified by use of the prefix/suffix "c" or "p" indicating whether they are acting for or as the service-consuming or service-producing NF. It is to be noted that instead of "c" and "p", "v" for visited and "h" for home can be used to refer to at least some respective entities in the visited and home PLMNs. In some embodiments, a system implementing an embodiment of the present disclosure comprises both fourth generation, 4G, and fifth generation, 5G, parts.

In some embodiments OAuth based service authorization and token exchange is applied between the mobile networks. Alternatively to OAuth, another authorization framework may be applied. Thus, a network entity, such as an NRF, may be or perform as an authorization server, AS, such as an OAuth authorization server. The NFc may be an OAuth client and the NFp may operate as OAuth resource server, and they may be configured to support OAuth authorization framework as defined in RFC 6749, for example.

In general, a network support function such as an NRF may further be configured to act as an authorization server, which may advise an NFc concerning a suitable NFp, and provide the NFc with a cryptographic access token authorizing the NFc to use the service provided by the NFp. In general, an NRF is a terminological example of a network support node. The NFc may include the access token in a request message when requesting the service, for example in an "authorization bearer" header. Such an access token may be referred to herein briefly as a token. For example, the NRF may act as an OAuth 2.0 authentication server. The token may comprise e.g. identifiers of the NFc, NRF and/or NFp, a timestamp and/or an identifier of the specific service which is authorised for the NFc with the token. The token may comprise a token identifier of itself, for example a serial number. The token identifier may uniquely identify the token. The token may be cryptographically signed using a private key of the NRF A validity of such a cryptographic signature may be verified using the corresponding public key of the NRF, which the NFp may obtain in connection with registering with the NRF the service(s) it offers. When the NFc contacts the NFp, it may present the access token, which the NFp may then verify, for example at least in part by using its copy of the public key of the NRF

In case a token is revoked after it is provided to an NFc, use of the token should be prevented. Possible reasons for revoking tokens include that the token is no longer used or needed, that the contents of the token have become obsolete, for example when services authorized by the token have changed, that the token owner's, such as NRF's, private key has been compromised, that the token has been stolen, or that an NFc has become compromised after being given the token.

Thus the NFc would benefit from knowing of the revocation so it can stop using the token and/or the NFp would benefit from knowing of the revocation to be enabled to refuse service requests which are based on the revoked access token. To this end, tokens may be identified using token identifiers, such as serial numbers. The tokens may comprise their identifier, such as serial number. The identifier may be included in the token in access token claims of the token, for example. The identifier may be included in the token within a scope of a cryptographic signature applied to the token by the NRF issuing the token. Further, NFc and NFp nodes the access token is involved with may subscribe to status changes of the access token at the NRF, or other network support node.

When an NFc requests an access token from the NRF, it may include in this request message a network address where this NFc may be reached. Examples of such network addresses include a callback URI, an email address and an URL. In the event the NRF decides to authorize the NFc to access the service of the NFp, it may store a subscription of the NFc to the state of an access token the NRF provides the NFc to authorize it to access the service. The subscription may associate the network address where this NFc may be reached with the token identifier, for example.

When the NFc subsequently requests the service from the NFp using the access token, the NFp determines if this is the first time this access token is used in requesting a service from this NFp. This determination may be based on the access token identifier, such as the serial number, for example. If this is the first time this token is used to request a service from this NFp, the NFp may send a query message to the NRF which has issued the token to query for the current status of the token. In other words, the NFp may send the query message to the NRF responsive to determining that this is the first time the specific token is used to request a service from the NFp. The query message may comprise a network address where this NFp may be reached. Examples of such network addresses include a callback URI, an email address and an URL. The NRF may store a subscription of the NFp to the state of an access token. If this is not the first time this token is used to request a service from this NFp, the NFp may retrieve the status of the token from a local cache. The subscription may associate the network address where this NFP may be reached with the token identifier, for example.

In some embodiments, the NRF stores a subscription for only the NFc but not the NFp, in other embodiments the NRF stores a subscription for only the NFp but not the NFc, and in yet further embodiments the NRF stores a subscription for both the NFc and NFp. In embodiments where no subscription is stored for NFc or NFp, this NF need not transmit the network address where this NF may be reached to the NRF

NFs may, in general, query for the status of the token from the NRF by using the token identifier. In some embodiments, the querying NFs need not be the NFc and NFp actively involved in using the token. To enable these queries, the NRF may have a specific token status querying API.

In case the token is revoked by changing its status in the NRF to a revoked status, the NRF may check whether it has subscriptions to the status of this NRF, or to changes in this status. The NRF may then use the network address(es) provided by the NFc and/or NFp to notify these nodes of the revocation of the token. In response, the NFs may delete the token from their local caches.

An example set of access token claims for requesting a token is provided in the following:
AccessT okenReq:
type: object
required:
   - grant_type
   - nfInstanceId
   - scope
properties:
   tokenStatusCallbackUri:
   $ref: 'TS29571_CommonData.yaml#/components/schemas/Uri'

An example set of access token claims for a provided token is provided in the following:
AccessTokenClaims:
type: object
required:
   - iss
   - sub
   - aud
   - scope
   - exp
properties:
   ...
   tokenSerialNumber:
   type: string

Further, a revocation status request procedure may be defined, wherein a first phase includes an NRF creating, responsive to an access token status request, a subscription using a network address where a requesting NF is reachable, such as a callback URI. In a second phase, the NRF responds by an acknowledgement. In a third phase the NRF notifies the requesting NF when the status of the access token identified in the access token status request changes.

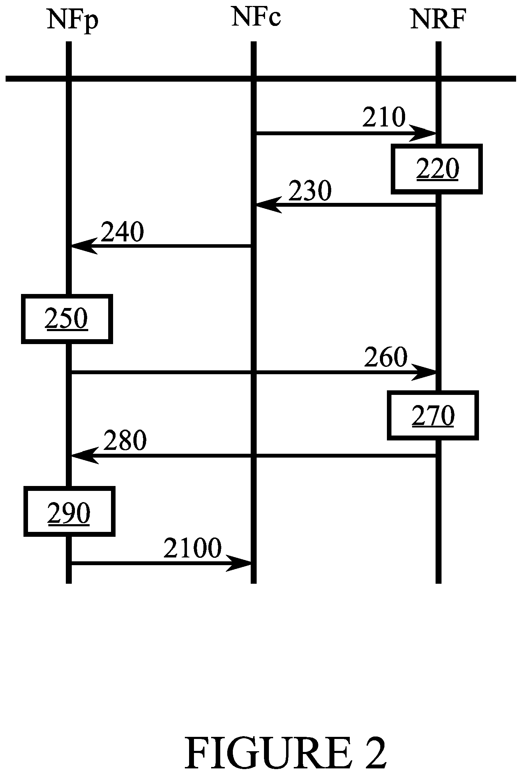

FIGURE 2 illustrates an example process in accordance with at least some embodiments of the present invention. On the vertical axes are disposed, from the left, NFp, NFc and NRF. These functions have been described above. Time advances from the top toward the bottom.

In phase 210, an NFc requests access to a service by transmitting a message to the NRF. The message may identify the service and/or NFp providing the service, or the message may provide descriptors of the service in case the NFc doesn't know which NFp would provide the service. The message may comprise a network address where the NFc can be reached, as described above.

In phase 220, the NRF processes the message it received in phase 210. In detail, the NRF makes an admission decision concerning whether the NFc is given access to the service provided by the NFp. The NRF may also choose a suitable NFp in case the request of phase 210 doesn't identify one. In case the NRF decides to authorize the NFc for the service, it provides an access token to the NFc for this service in phase 230. In phase 220, the NRF may further store a subscription of the NFc to status changes of the token provided in phase 230. The subscription may, for example, associate the network address where the NFc can be reached with a token identifier of the token.

Responsive to the message of phase 230, the NFc may store the access token in a local cache of the NFc. In phase 240, the NFc requests the service from the NFp, providing the access token in the request transmitted in phase 240.

Phase 250 comprises the NFp checking the integrity of the access token. This may involve, for example, verifying that a cryptographic signature of the NRF, applied over the contents of the access token, is valid, using a public key of the NRF to perform this verification, for example. Such a cryptographic signature may be computed over contents of the token, which may include the access token identifier and information on the service which the token authorizes. The signed information may also comprise identifiers of the NFc and/or NFp. The token may comprise an identifier of the NRF. The NFp may also check, that the token has not expired.

In case this is the first time this access token is being used to access a service from the NFp, the NFp may be configured to perform phase 260, which comprises transmitting a query message to the NRF to check the status of the token. The query message of phase 260 may comprise the token identifier and a network address where the NFp can be reached, for example. In case the verifying of phase 250 indicates the token is invalid, the querying of phase 260 is not necessary, and the request of the NFc may be refused.

In phase 270, which occurs as a response to the query of phase 260, the NRF stores a subscription of the NFp to status changes of the token. The subscription may, for example, associate the network address where the NFp can be reached with a token identifier of the token. The NRF advises the NFp of the status of the token in phase 280. The status communicated in phase 280 may be a valid status or a revoked status, for example.

In phase 290 the NFp may update its internal cache concerning the token, for example by including therein an indication the token has not been revoked. Further, the cache may be updated to include an indication that the token has been used to access the NFp, that is, a subsequent use is not the first and would not trigger the querying of phase 260. In phase 2100, the NFc may be informed that it is granted access to the service. The message of phase 2100 may be an accepting SBI message, for example.

As described above, in some embodiments there is only one subscription to the status of the token, that is, either the subscription of the NFc or the NFp may be absent.

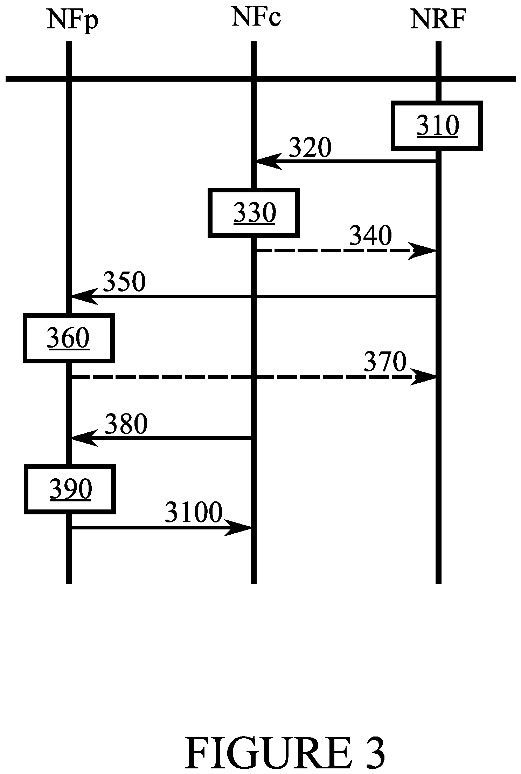

FIGURE 3 illustrates an example process in accordance with at least some embodiments of the present invention. The vertical axes correspond to those of FIGURE 2. The events of FIGURE 3 take place after those of FIGURE 2. In phase 310, the token provided to the NFc is revoked, that is, its status in the NRF is changed to a revoked status. This may be accomplished by user configuration, for example.

As the NRF stores, in this embodiment, two subscriptions for status changes of the token, the status change will be notified twice from the NRF. First, phase 320, the NRF notifies the NFc, which will responsively update its cache and remove the revoked token in phase 330. The token may be identified by the token identifier, for example, to remove the correct token. An optional acknowledgement may be provided back to the NRF as phase 340. Second, the NRF may notify the NFp as phase 350. Responsively, phase 360, the NFp updates its cache to indicate the token as a revoked token, or simply by removing the token from the cache entirely. An optional acknowledgement may be provided back to the NRF as phase 370. The notifications of phases 320 and 350 may be performed using the network addresses provided to the NRF by the NFc and the NFp, as described in connection with FIGURE 2. While illustrated as the NFc being notified first and the NFp then, the sequence in which these notifications is performed is not important and the notification message sequences may also be performed concurrently, by notifying the other NF before receiving an acknowledgement from the NF notified first.

In case the NFc would, for some reason, after the revocation flow of phases 310 - 370, request the service from the NFp using the revoked token, the following could take place. The request, comprising the revoked token, is transmitted in phase 380. The NFp verifies the token in phase 390. The cryptographic signature is correct, as it was added by the NRF using the private key of the NRF, however, the local cache of NFp comprises an indication that the token has been revoked. As a result, the NFp informs the NFc, in phase 3100, that the request of phase 380 is refused. The message of phase 3100 may be a "403 forbidden" message, for example.

In embodiments where the revoked token is deleted from the local cache of the NFp, the NFp would treat the request of phase 380 as a first request using the token, triggering the query of phase 260 in FIGURE 2, responsive to which the NFp would receive from the NRF an indication the token is revoked. Including in the local cache of the NFp the indication of revocation thus provides the technical benefit that the querying from NRF need not be performed, and the request of phase 380 may be refused faster and with less signalling. This is useful in case plural requests 380 with invalid/revoked tokens are used as a denial-of-service attack, for example.

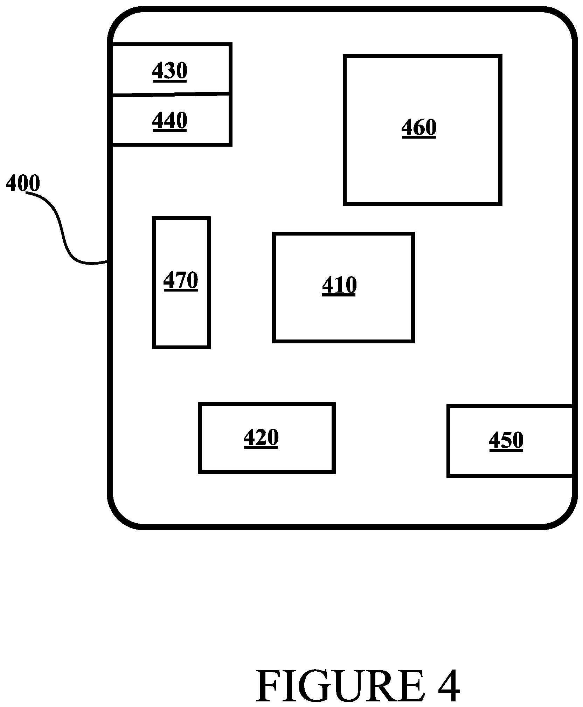

FIGURE 4 illustrates an example apparatus capable of supporting at least some embodiments of the present invention. Illustrated is device 400, which may comprise, for example, a node configured to act as an NRF, NFc or NFp. Such a node may comprise a fixed node or a mobile node, in some embodiments even a user equipment. Comprised in device 400 is processor 410, which may comprise, for example, a single- or multi-core processor wherein a single-core processor comprises one processing core and a multi-core processor comprises more than one processing core. Processor 410 may comprise, in general, a control device. Processor 410 may comprise more than one processor. Processor 410 may be a control device. A processing core may comprise, for example, a Cortex-A8 processing core manufactured by ARM Holdings or a Steamroller processing core designed by Advanced Micro Devices Corporation. Processor 410 may comprise at least one Qualcomm Snapdragon and/or Intel Atom processor. Processor 410 may comprise at least one application-specific integrated circuit, ASIC. Processor 410 may comprise at least one field-programmable gate array, FPGA. Processor 410 may be means for performing method steps in device 400, such as operating, assigning, notifying, processing and sending. Processor 410 may be configured, at least in part by computer instructions, to perform actions.

A processor may comprise circuitry, or be constituted as circuitry or circuitries, the circuitry or circuitries being configured to perform phases of methods in accordance with embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 400 may comprise memory 420. Memory 420 may comprise random-access memory and/or permanent memory. Memory 420 may comprise at least one RAM chip. Memory 420 may comprise solid-state, magnetic, optical and/or holographic memory, for example. Memory 420 may be at least in part accessible to processor 410. Memory 420 may be at least in part comprised in processor 410. Memory 420 may be means for storing information. Memory 420 may comprise computer instructions that processor 410 is configured to execute. When computer instructions configured to cause processor 410 to perform certain actions are stored in memory 420, and device 400 overall is configured to run under the direction of processor 410 using computer instructions from memory 420, processor 410 and/or its at least one processing core may be considered to be configured to perform said certain actions. Memory 420 may be at least in part comprised in processor 410. Memory 420 may be at least in part external to device 400 but accessible to device 400.

Device 400 may comprise a transmitter 430. Device 400 may comprise a receiver 440. Transmitter 430 and receiver 440 may be configured to transmit and receive, respectively, information in accordance with at least one cellular or non-cellular standard. Transmitter 430 may comprise more than one transmitter. Receiver 440 may comprise more than one receiver. Transmitter 430 and/or receiver 440 may be configured to operate in accordance with global system for mobile communication, GSM, wideband code division multiple access, WCDMA, 5G, long term evolution, LTE, IS-95, wireless local area network, WLAN, Ethernet and/or worldwide interoperability for microwave access, WiMAX, standards, for example.

Device 400 may comprise a near-field communication, NFC, transceiver 450. NFC transceiver 450 may support at least one NFC technology, such as NFC, Bluetooth, Wibree or similar technologies.

Device 400 may comprise user interface, UI, 460. UI 460 may comprise at least one of a display, a keyboard, a touchscreen, a vibrator arranged to signal to a user by causing device 400 to vibrate, a speaker and a microphone. A user may be able to operate device 400 via UI 460, for example to accept incoming telephone calls, to originate telephone calls or video calls, to browse the Internet, to manage digital files stored in memory 420 or on a cloud accessible via transmitter 430 and receiver 440, or via NFC transceiver 450, and/or to play games.

Device 400 may comprise or be arranged to accept a user identity module 470. User identity module 470 may comprise, for example, a subscriber identity module, SIM, card installable in device 400. A user identity module 470 may comprise information identifying a subscription of a user of device 400. A user identity module 470 may comprise cryptographic information usable to verify the identity of a user of device 400 and/or to facilitate encryption of communicated information and billing of the user of device 400 for communication effected via device 400.

Processor 410 may be furnished with a transmitter arranged to output information from processor 410, via electrical leads internal to device 400, to other devices comprised in device 400. Such a transmitter may comprise a serial bus transmitter arranged to, for example, output information via at least one electrical lead to memory 420 for storage therein. Alternatively to a serial bus, the transmitter may comprise a parallel bus transmitter. Likewise processor 410 may comprise a receiver arranged to receive information in processor 410, via electrical leads internal to device 400, from other devices comprised in device 400. Such a receiver may comprise a serial bus receiver arranged to, for example, receive information via at least one electrical lead from receiver 440 for processing in processor 410. Alternatively to a serial bus, the receiver may comprise a parallel bus receiver.

Device 400 may comprise further devices not illustrated in FIGURE 4. For example, where device 400 comprises a smartphone, it may comprise at least one digital camera. Some devices 400 may comprise a back-facing camera and a front-facing camera, wherein the back-facing camera may be intended for digital photography and the front-facing camera for video telephony. Device 400 may comprise a fingerprint sensor arranged to authenticate, at least in part, a user of device 400. In some embodiments, device 400 lacks at least one device described above. For example, some devices 400 may lack a NFC transceiver 450 and/or user identity module 470.

Processor 410, memory 420, transmitter 430, receiver 440, NFC transceiver 450, UI 460 and/or user identity module 470 may be interconnected by electrical leads internal to device 400 in a multitude of different ways. For example, each of the aforementioned devices may be separately connected to a master bus internal to device 400, to allow for the devices to exchange information. However, as the skilled person will appreciate, this is only one example and depending on the embodiment various ways of interconnecting at least two of the aforementioned devices may be selected without departing from the scope of the present invention.

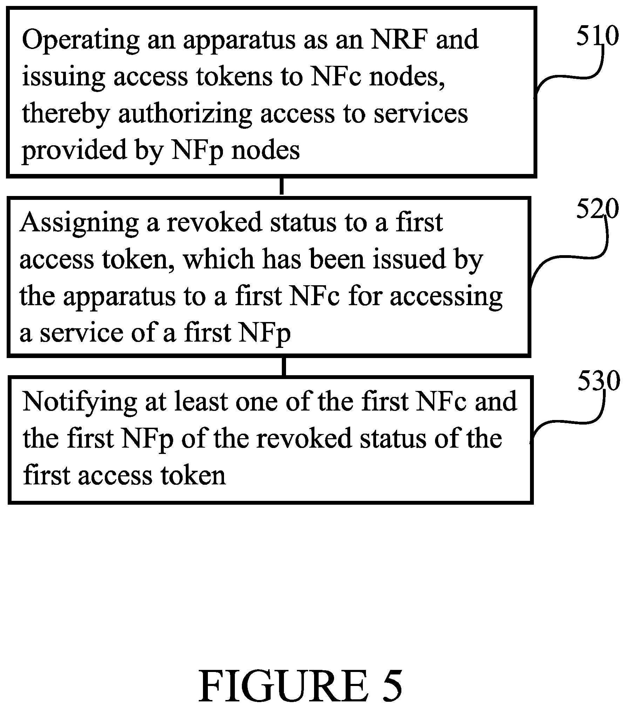

FIGURE 5 is a flow graph of a method in accordance with at least some embodiments of the present invention. The phases of the illustrated method may be performed in an NRF, an auxiliary device or a personal computer, for example, or in a control device configured to control the functioning thereof, when installed therein.

Phase 510 comprises operating an apparatus as a NRF and issuing access tokens to NFc nodes, thereby authorizing access to services provided by NFp nodes. Phase 520 comprises assigning a revoked status to a first access token, which has been issued by the apparatus to a first NFc for accessing a service of a first NFp. Finally, phase 530 comprises notifying at least one of the first NFc and the first NFp of the revoked status of the first access token.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments of the present invention find industrial application in management of communication networks.

### ACRONYMS LIST

- 3GPP: third generation partnership project
- 5G: fifth generation
- 5GC: 5G core network
- AF: application function
- AMF: access and mobility function
- API: application programming interface
- AUSF: authentication server function
- CN: core network
- DNS: domain name server
- DRA: diameter routing agent
- HTTP: hypertext transfer protocol
- FQDN: fully qualified domain name
- IP: Internet protocol
- IPX: IP exchange
- NEF: network exposure function
- NF: network function
- NRF: network repository function
- NSI: network slice instance
- NSSF: network slice selection function
- S-NSSAI: single-network slice selection assistance information
- PCF: policy control function
- PLMN: public land mobile network
- SBA: service based architecture
- SEPP: security edge protection proxy
- SCP: service communication proxy
- SMF: session management function
- UDM: unified data management
- URL: uniform resource locator
- URI: uniform resource identifier
- VNF: virtualized network function

## Claims

1. An apparatus comprising means for:
- operating as a network repository function and issuing access tokens to network function consumers, thereby authorizing access to services provided by network function producers;
- assigning a revoked status to a first access token, which has been issued by the apparatus to a first network function consumer for accessing a service of a first network function producer, and
- notifying at least one of the first network function producer and the first network function consumer of the revoked status of the first access token.

2. The apparatus according to claim 1, wherein the means are further configured to cause the apparatus to store a subscription of the first network function consumer and/or the first network function producer to be notified concerning status changes of the first access token.

3. The apparatus according to claim 2, wherein the means are further configured to store the subscription of the first network function consumer in terms of a first callback uniform resource identifier, a first email address or a first uniform resource locator and/or to store the subscription of the first network function producer in terms of a second callback uniform resource identifier, a second email address or a second uniform resource locator.

4. The apparatus according to any of claims 1 - 3, wherein the means are further configured to cause the apparatus to identify the first access token by a token serial number, the first access token comprising the token serial number.

5. The apparatus according to any of claims 1 - 4, wherein the means are further configured to cause the apparatus to respond to a query message from the first network function producer with a response message to the first network function producer, the response message indicating the status of the first access token.

6. An apparatus comprising means for:
- operating as a network function producer by providing at least a first service to requesting network function consumers;
- processing a service request for the first service, the service request comprising an access token, at least by determining whether the service request is a first service request comprising the access token, and
- sending a query message concerning the access token to a network repository function to query for a status of the access token.

7. The apparatus according to claim 6, wherein the means are further configured to cause the apparatus to identify the access token by a token serial number, the access token comprising the token serial number.

8. The apparatus according to claims 6 or 7, wherein the means are further configured to cause the apparatus to retrieve the status of the access token from a local cache of the apparatus responsive to determining the service request is not the first service request comprising the access token.

9. A method comprising:
- operating an apparatus as a network repository function and issuing access tokens to network function consumers, thereby authorizing access to services provided by network function producers;
- assigning a revoked status to a first access token, which has been issued by the apparatus to a first network function consumer for accessing a service of a first network function producer, and
- notifying at least one of the first network function producer and the first network function consumer of the revoked status of the first access token.

10. The method according to claim 9, further comprising storing a subscription of the first network function consumer and/or the first network function producer to be notified concerning status changes of the first access token.

11. The method according to claim 9 or 10, further comprising responding to a query message from the first network function producer with a response message to the first network function producer, the response message indicating the status of the first access token.

12. A method comprising:
- operating an apparatus as a network function producer by providing at least a first service to requesting network function consumers;
- processing a service request for the first service, the service request comprising a first access token, at least by determining whether the service request is a first service request comprising the first access token, and
- sending a query message concerning the access token to a network repository function to query for a status of the first access token.

13. The method according to any of claims 9 - 12, further comprising identifying the first access token by a token serial number, the first access token comprising the token serial number.

14. A non-transitory computer readable medium having stored thereon a set of computer readable instructions that, when executed by at least one processor, cause an apparatus to at least:
- operate as a network repository function and issue access tokens to network function consumers, thereby authorizing access to services provided by network function producers;
- assign a revoked status to a first access token, which has been issued by the apparatus to a first network function consumer for accessing a service of a first network function producer, and
- notify at least one of the first network function producer and the first network function consumer of the revoked status of the first access token.

15. A non-transitory computer readable medium having stored thereon a set of computer readable instructions that, when executed by at least one processor, cause an apparatus to at least:
- operate as a network function producer by providing at least a first service to requesting network function consumers;
- process a service request for the first service, the service request comprising an access token, at least by determining whether the service request is a first service request comprising the access token, and
- send a query message concerning the access token to a network repository function to query for a status of the access token.
